# EUROPÄISCHE PATENTANMELDUNG

(11) **EP 0 574 765 A1**
(43) Veröffentlichungstag der Anmeldung: **22.12.1993**
(21) Anmeldenummer: 93108778.7
(22) Anmeldetag: 01.06.1993
(51) Int. Cl.: B23K 11/30

(54) **Verfahren und Vorrichtung zum Widerstandsschweissen von hochleitfähigem Blechmaterial**

(30) Priorität: 17.06.1992 DE 4219934
(71) Anmelder: SIEMENS AKTIENGESELLSCHAFT, D-80333 München (DE)
(72) Erfinder: Stadler, Heinz, W-8000 München 60 (DE); Köstler, Gerhard, Dipl.-Ing., W-8050 Freising (DE)

(57) **Zusammenfassung**

Zur Schweißung von hochleitfähigem Blech, beispielsweise einer Kontaktfeder, auf einem Trägermaterial wird eine Elektrode (4) in Form einer Kreisscheibe mit einem konvex gekrümmten Rand (4a) verwendet. Jeweils nach einer vorgegebenen Anzahl von Schweißungen wird die Elektrode um einen bestimmten Winkelschritt weitergedreht. Dadurch kann die Standzeit der Elektrode vor deren Nacharbeitung oder Austausch gegenüber stiftförmigen Elektroden wesentlich erhöht werden.

## Beschreibung

Die Erfindung betrifft ein Verfahren sowie eine Vorrichtung zum Widerstandsschweißen von hochleitfähigem Blech auf einem hochleitfähigen Trägermaterial, insbesondere von Kontaktfedern eines Relais auf einem starren Träger.

Bei vielen Relais müssen Kontaktfedern mit Federträgern elektrisch und mechanisch verbunden werden. Die zunehmende Miniaturisierung und die zunehmenden elektrischen Anforderungen bewirken dabei, daß einerseits hochleitfähiger Werkstoff verwendet werden muß, andererseits das Federmaterial im Betrieb mechanisch hoch belastet wird. Hochleitfähiger Werkstoff läßt sich im allgemeinen jedoch nicht gut widerstandsschweißen. Insbesondere führt die Klebeneigung zu den Schweißelektroden bei automatischen Fertigungsprozessoren zu Problemen. Zudem ist die Schweißstelle, die durch das Schweißen thermisch und mechanisch geschädigt ist, gleichzeitig auch die Einspannstelle, also die am höchsten belastete Zone der Kontaktfeder. Sie kann oft auch nicht durch zusätzliche konstruktive Maßnahmen gegen Überlastung geschützt werden.

Um die Schweißung selbst optimal auszuführen und in der angegebenen Weise belastbar zu machen, ist es zunächst wichtig, daß der Schweißstrom gebündelt die definierte Schweißstelle durchfließt. Dies kann man beispielsweise durch eine konvex gekrümmte, etwa kegelförmige oder nasenförmige Elektrode erreichen, wie sie beispielsweise in der EP-A-0 000 876 gezeigt ist. Je kleiner jedoch der Radius an der Spitze der Elektrode ist, umso schneller brennt diese ab, und umso kürzer ist ihre Standzeit in einer automatischen Fertigung.

Aus diesem Grund werden Massenartikel, wie Kontaktfedern für Relais, in der automatischen Fertigung zwischen flachen Elektroden geschweißt, wobei die Schweißstelle selbst durch Schweißwarzen definiert ist, welche zuvor in das Trägermaterial für die Kontaktfeder eingeprägt werden.

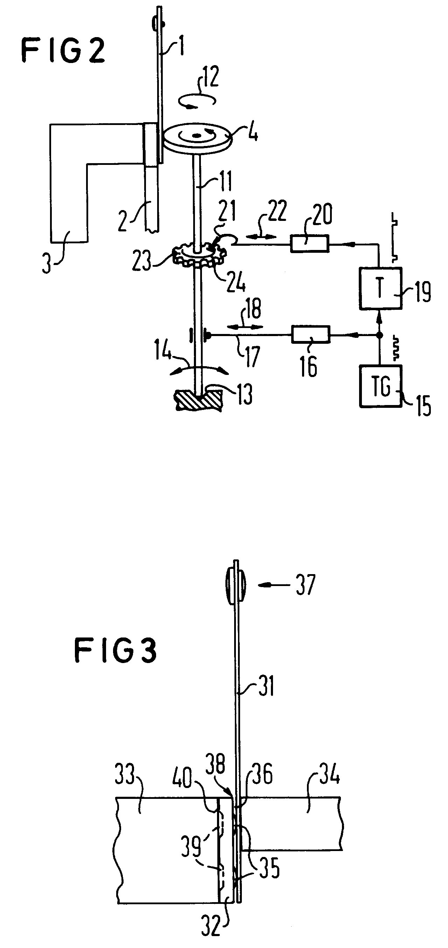

Eine derartige Anordnung zeigt Figur 3. Eine Kontaktfeder 31 soll auf einen Federträger 32 aufgeschweißt werden. Dabei wird sie zwischen den flachen Stirnseiten der Schweißelektroden 33 und 34 eingeklemmt. Um definierte Schweißstellen zu gewinnen, sind im Federträger 32 zwei Schweißwarzen 35 eingeprägt, auf denen die Kontaktfeder 31 aufliegt. Diese Schweißwarzen 35 schmelzen jedoch in der Regel nicht bis zur Oberfläche des Federträgers 32 ab, so daß die Kontaktfeder nach dem Schweißen frei auf einer Erhöhung des Federträgers hängt. Dies führt zu zusätzlichen Querspannungen. Da außerdem zwischen dem Federträger 32 und der Kontaktfeder 31 ein Spalt 36 verbleibt, kann sich die Kontaktfeder bei Belastung in Richtung des Pfeiles 37 nicht an der Federträgerkante 38 abstützen. Die Kontaktfeder wird an der Schweißstelle, also an der durch die Schweißung geschädigten Zone, mit den höchsten Spannungen belastet. Ein weiterer Nachteil ergibt sich durch das Prägen der Schweißwarze; denn bei der Prägung dieser Warze 35 entsteht an der gegenüberliegenden Seite des Federträgers 32 jeweils eine Ausnehmung 39. Der Schweißstrom kann damit nicht auf kürzestem Wege die Schweißpartner durchfließen, sondern er muß einen längeren Weg mit erhöhtem Widerstand nehmen; hierzu muß wiederum die Schweißleistung erhöht werden. Der Strom nimmt den kürzest-möglichen Weg zwischen den Elektroden, also über die Kante 40, wo das Trägermaterial angeschmolzen wird. Dies ist die Ursache des Klebens zwischen dem Träger 32 und der Elektrode 33, was zu Störungen des Fertigungsablaufes führen kann.

Aufgabe der Erfindung ist es, ein Verfahren und eine Vorrichtung zum Widerstandsschweißen von hochleitfähigen Blechmaterialien anzugeben, bei dem die genannten Probleme gelöst bzw. vermieden werden, so daß eine zuverlässige und belastungsfähige Schweißstelle erzielt, zugleich aber eine hohe Standzeit der Elektroden bei der Fertigung großer Stückzahlen gewährleistet wird.

Erfindungsgemäß wird dies erreicht durch ein Verfahren mit folgenden Schritten:
- das Blech wird plan auf die ebene Oberfläche des Trägers gelegt,
- die Schweißung erfolgt mit einer Elektrode in Form einer Kreisscheibe mit einem konvex gekrümmten Rand, und
- die Elektrode wird jeweils nach einer vorgegebenen Anzahl von Schweißungen um einen bestimmten Winkelschritt gedreht.

Bei der erfindungsgemäßen Methode wird also ohne Schweißwarzen geschweißt. Dadurch kann der Strom auf kürzestem Wege die Materialien durchfließen, so daß die Schweißleistung optimal ausgenutzt wird und nicht zu hoch dimensioniert werden muß. Die Feder liegt dabei plan am Federträger an und kann sich an der Federträgerkante abstützen. Die Schweißstelle wird somit bei der betriebsmäßigen Federbewegung nur geringfügig belastet. Klebeeffekte beim Schweißen treten nicht auf, ebenso auch keine Querverspannungen.

Durch die bei der Erfindung verwendete scheibenförmige Elektrode, die nach einer vorgegebenen Anzahl von Schweißungen jeweils um einen bestimmten Winkelschritt weitergedreht wird, kann eine hohe Zahl von Schweißvorgängen durchgeführt werden, bevor die Elektrode nachgearbeitet oder ausgetauscht werden muß. Trotz der gewölbten Oberfläche am Rand der Scheibe kann bei dieser Elektrode die Standzeit also wesentlich höher sein als bei einer stiftförmigen Elektrode mit gewölbter Oberfläche.

In einer bevorzugten Ausführungsform wird eine scheibenförmige Elektrode verwendet, bei der der Krümmungsradius am Elektrodenumfang in den Ebenen senkrecht zur Scheibenebene geringer ist als der Umfangsradius der Scheibe. Vorzugsweise kann dabei ein Verhältnis in der Größenordnung von 2:1 verwendet werden. Durch die verschiedenen Krümmungsradien der Scheibe selbst und des Scheibenumfangs senkrecht zur Scheibenebene entsteht jeweils ein ellipsenförmiger Schweißpunkt. Zweckmäßigerweise wird die Elektroda je nach dem Verhältnis der beiden Krümmungsradien so an das zu schweißende Blech angelegt, daß die längere Achse der Schweißellipse parallel zur Biegeachse des betreffenden Federblechs liegt, wenn das geschweißte Federblech, beispielsweise in Form einer Kontaktfeder, betriebsmäßig auf Schwenkung beansprucht werden soll.

Eine erfindungsgemäß ausgestaltete Vorrichtung zum Widerstandsschweißen nach dem oben genannten Verfahren besitzt eine Elektrodenhalterung in Form einer axialen Lagerung für die scheibenförmige Elektrode und eine Einrichtung zum Drehen der scheibenförmigen Elektrode jeweils um einen bestimmten Winkelschritt. Eine zweckmäßige Steuerung hierfür besitzt weiterhin eine Einrichtung, welche die Anzahl der Schweißungen in einer bestimmten Winkelstellung der scheibenförmigen Elektrode zählt und beim Erreichen einer vorgegebenen Anzahl von Schweißungen jeweils die Elektrode um einen bestimmten Winkelschritt weiterdreht.

Die Erfindung wird nachfolgend an einem Ausführungsbeispiel anhand der Zeichnung näher erläutert. Es zeigt
Figur 1 die Form und Anordnung der Elektroden für eine erfindungsgemäße Schweißung einer Kontaktfeder auf einen Federträger,
Figur 2 eine schematische Darstellung einer Schweißanordnung gemäß Figur 1 mit Einrichtungen zur betriebsmäßigen Bewegung der scheibenförmigen Schweißelelektrode und
Figur 3 eine herkömmliche Gestaltung und Anordnung der Elektroden zum Schweißen einer Kontaktfeder, wie sie bereits eingangs beschrieben wurden.

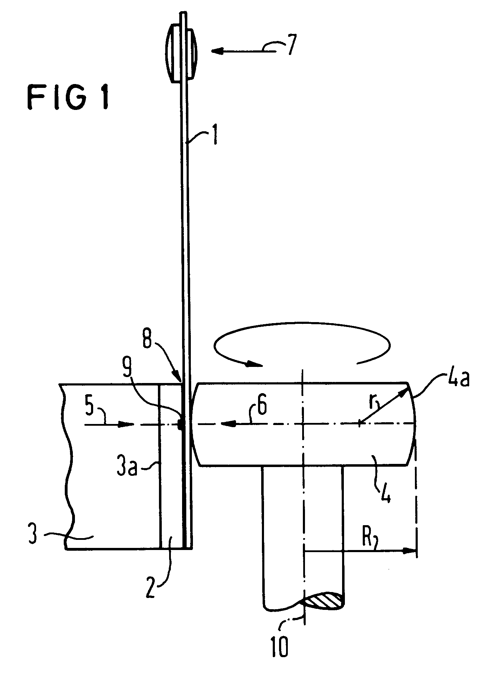

Die in Figur 1 gezeigte Anordnung zum Schweißen einer Kontaktfeder 1 auf einen Federträger 2 enthält eine erste Elektrode 3 mit einer planen Elektrodenfläche 3a sowie eine scheibenförmige Elektrode 4 mit einem Radius R, die an ihrem umlaufenden Rand 4a eine konvexe Rundung mit dem Radius r besitzt.

Bei der Durchführung dieser Schweißmethode wird die Kontaktfeder 1 plan auf den Federträger 2 gelegt und durch Anpressen der beiden Elektroden 3 und 4 in Richtung der Pfeile 5 und 6 sowie durch Anlegen eines entsprechenden Schweißstromes werden die Kontaktfeder 1 und der Federträger 2 verschweißt. Da die Kontaktfeder 1 plan aufliegt, kann sie sich bei der betriebsmäßigen Betätigung in Richtung des Pfeiles 7 an der Kante 8 des Federträgers 2 abstützen, so daß die Schweißstelle 9 entlastet ist. Nach einer vorgegebenen Anzahl von Schweißungen wird die Elektrode 4 um ihre Achse 10 um einen bestimmten Winkelschritt weitergedreht, so daß eine noch nicht abgenutzte periphere Oberflächenstelle bei den weiteren Schweißungen auf der Kontaktfeder aufliegt.

Eine mögliche Betätigungsanordnung für die scheibenförmige Elektrode 4 ist in Figur 2 schematisch skizziert. Zu sehen ist wiederum eine plane Gegenelektrode 3, an der der Federträger 2 und die Kontaktfeder 1 anliegen. Die Elektrode 4 ist über eine Welle 11 so gelagert, daß sie um ihre Achse in der Kreisrichtung 12 drehbar und um ihre Lagerung 13 in der Richtung des Doppelpfeiles 14 schwenkbar ist. Ein Taktgeber 15 für den Schweißtakt betätigt bei jedem Taktschritt über einen Zylinder 16 eine Kolbenstange 17 in Richtung des Doppelpfeiles 18, so daß die Elektrode 4 mit ihrer Welle 11 zunächst von der Gegenelektrode 3 weg geschwenkt wird, damit eine neue Kontaktfeder 1 mit einem Federträger 2 in die Schweißposition gebracht werden kann. Danach wird die scheibenförmige Elektrode 4 zurückgeschwenkt und an die Kontaktfeder 1 angedrückt. Die Anzahl der Impulse des Taktgebers 15 wird in einem Teiler 19 gezählt. Wenn eine vorgegebene Anzahl von Taktimpulsen entsprechend der gleichen Anzahl von Schweißvorgängen gezahlt wurde, gibt der Teiler 19 einen Impuls an den Zylinder 20, der über einen Finger 21 in Richtung des Doppelpfeiles 22 ein mit der Welle 11 fest verbundenes Zahnrad 23 um einen vorgegebenen Winkelschritt in Richtung des Pfeiles 24 weiterdreht. Damit kommt eine neue Umfangsstelle der Elektrode 4 für die nachfolgenden Schweißvorgänge zum Einsatz.

Lediglich um eine Größenordnung beispielshalber zu geben, sei noch erwähnt, daß beispielsweise im praktischen Einsatz mit einer Winkelstellung der Elektrode 4 etwa 500 bis über 1000 Schweißungen durchgeführt werden können, bis sie um einen Winkelschritt weitergedreht werden muß. Nimmt man wiederum beispielshalber an, daß die Elektrode 40 bis 50 Winkelstellungen einnehmen kann, so kommt man auf 20 000 bis 50 000 Schweißungen, die durchgeführt werden können, bevor die Elektrode am Rand nachgearbeitet oder ersetzt werden muß. Es sei noch einmal betont, daß dies lediglich Beispielsangaben sind, während je nach den Bedingungen, wie Materialien und Schweißströmen, auch andere Werte in Betracht kommen können.

Auch der in Figur 2 gezeigte Aufbau ist lediglich ein schematisches Beispiel. So wäre es durchaus auch denkbar, die Elektrode 4 lediglich um eine Achse drehbar und nicht schwenkbar zu lagern, während die Elektrode 3 bei jedem Wechsel des Werkstücks zurückgeschwenkt werden kann. Im übrigen ist in Figur 2 die Stromzufuhr zu den Elektroden und deren Steuerung nicht eigens gezeigt, da diese jedem Fachmann geläufig sind.

## Patentansprüche

1. Verfahren zum Widerstandsschweißen von hochleitfähigem Blech (1) auf einem hochleitfähigen Trägermaterial (2) mit folgenden Schritten:
- das Blech (1) wird plan auf die ebene Oberfläche des Trägers (2) gelegt,
- die Schweißung erfolgt mit einer Elektrode (4) in Form einer Kreisscheibe mit einem konvex gekrümmten Rand (4a), und
- die Elektrode (4) wird jeweils nach einer vorgegebenen Anzahl von Schweißungen um einen bestimmten Winkelschritt gedreht.

2. Verfahren nach Anspruch 1, wobei der Krümmungsradius (r) am Elektrodenumfang in den Ebenen senkrecht zur Scheibenebene geringer ist als der Umfangsradius (R) der Scheibe.

3. Verfahren nach Anspruch 2, wobei der Krümmungsradius (r) am Scheibenumfang in den Ebenen senkrecht zur Scheibenebene etwa halb so groß ist wie der Umfangsradius (R) der Scheibe.

4. Verfahren nach einem der Ansprüche 1 bis 3 zum Schweißen einer Kontaktfeder (1) auf einem hochleitfähigen Träger (2), wobei die Elektrodenscheibe so zur Längsachse der Kontaktfeder ausgerichtet ist, daß die Krümmung mit dem größeren Radius (R) parallel zur Schwenkachse der Kontaktfeder bei deren bestimmungsmäßigem Verschwenken liegt.

5. Vorrichtung zum Widerstandsschweißen nach einem Verfahren gemäß einem der Ansprüche 1 bis 4, **gekennzeichnet durch** eine Elektrodenhalterung in Form einer Achswelle (11) für die scheibenförmige Elektrode (4) und durch eine Einrichtung (20, 21) zum Drehen der scheibenförmigen Elektrode (4) um einen bestimmten Winkelschritt.

6. Vorrichtung nach Anspruch 5, **gekennzeichnet durch** eine Steuerung (15, 19), welche die Anzahl der Schweißungen in einer bestimmten Winkelstellung der scheibenförmigen Elektrode (4) zählt und beim Erreichen einer vorgegebenen Anzahl von Schweißungen die Elektrode um einen bestimmten Winkelschritt weiterdreht.

7. Kontaktelement in einem Relais, bestehend aus einem starren Federträger (2) und einer auf dem Federträger geschweißten Kontaktfeder (1)**, dadurch gekennzeichnet,** daß das Kontaktelement nach dem Verfahren gemäß einem der Ansprüche 1 bis 4 hergestellt ist.
